(19) Europäisches Patentamt
European Patent Office
Office européen des brevets

(11) **EP 4 006 127 B1**

(12) **EUROPEAN PATENT SPECIFICATION**

(45) Date of publication and mention of the grant of the patent:
**31.01.2024 Bulletin 2024/05**

(21) Application number: **21210470.7**

(22) Date of filing: **25.11.2021**

(51) International Patent Classification (IPC):
*C10L 1/222* (2006.01)   *C10L 1/24* (2006.01)
*C10L 3/10* (2006.01)   *B01D 53/00* (2006.01)
*B01D 53/14* (2006.01)

(52) Cooperative Patent Classification (CPC):
**C10L 3/108; B01D 53/1425; B01D 53/1487;**
B01D 2252/103; B01D 2252/2056;
B01D 2257/7025; C10L 1/2225; C10L 1/2431;
C10L 1/2437; Y02C 20/20; Y02E 60/14

(54) **MEDIUM FOR RAPID HYDRATE FORMATION AND PREPARATION METHOD, USE AND USE METHOD THEREOF**

MEDIUM ZUR SCHNELLEN HYDRATBILDUNG UND HERSTELLUNGSVERFAHREN, VERWENDUNG UND VERWENDUNGSVERFAHREN DAFÜR

SUPPORT DE FORMATION RAPIDE D'HYDRATES ET PROCÉDÉ DE PRÉPARATION, UTILISATION ET SON PROCÉDÉ D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2020 CN 202011351034**

(43) Date of publication of application:
**01.06.2022 Bulletin 2022/22**

(73) Proprietor: **China University of Petroleum-Beijing Beijing 102249 (CN)**

(72) Inventors:
• **CHEN, Guangjin**
  **Beijing City, 102249 (CN)**
• **XIAO, Peng**
  **Beijing City, 102249 (CN)**
• **SUN, Changyu**
  **Beijing City, 102249 (CN)**
• **CHEN, Wan**
  **Beijing City, 102249 (CN)**
• **ZHANG, Hongbo**
  **Beijing City, 102249 (CN)**
• **LUO, Mengling**
  **Beijing City, 102249 (CN)**

(74) Representative: **Dehns**
  **St. Bride's House**
  **10 Salisbury Square**
  **London EC4Y 8JD (GB)**

(56) References cited:
**US-A1- 2012 260 680**

**Description**

**TECHNICAL FIELD**

The present invention relates to gas hydrate, and specifically relates to a medium for rapid hydrate formation and the related preparation method, the use and the use method thereof.

**BACKGROUND**

Gas hydrates are non-stoichiometric crystalline substances formed by water molecules and small gas molecules at low temperature and high pressure. In gas hydrates, the water molecules are linked by hydrogen bond to form polyhedral crystal lattice, and the small gas molecules are filled into the crystal lattices as guest molecules, so as to form gas hydrates. The guest gases that can form hydrates include pure gases such as methane, ethane, propane, carbon dioxide, and hydrogen; some mixed gases also can form gas hydrates, for example, natural gas hydrates that exist in large quantities in nature are formed by natural gas and water. Some substances with big molecules such as tetrahydrofuran and cyclopentane can also form hydrates. Gas hydrate is not only a huge energy source that exists in nature, but also alternative solutions for industries such as gas storage and transportation, gas separation, seawater desalination, and cold storage due to some special physical and chemical properties thereof. The hydrate-based gas storage and transportation technology is an industrial technology that store and transport gas via gas hydrates. It is a gas storage and transportation technology with application prospects having advantages of: storing about 180 cubic meters of natural gas per cubic meter of gas hydrate, being stored under atmospheric pressure, not easy to explode, and good tolerance to impurities. The hydrate-based gas separation technology may be achieved basing on the different thermodynamic conditions for forming hydrates from different gas molecules, and this difference can be used for gas separation such as refinery gas, biogas, and flue gas.

At present, all industrial technologies based on gas hydrate including hydrate-based gas storage and transportation and gas separation have not been industrialized. The core problem is that it is difficult to form the gas hydrate rapidly. The formation of gas hydrate is a process of forming solid products from gas and liquid, and the formed hydrate usually exists in the phase interface between gas and water, while this rigid hydrate layer hinders the gas-liquid contact, resulting in a slow hydrate formation rate. The current methods for promoting the formation of hydrates include physical methods such as stirring, bubbling, and spraying, and chemical methods using kinetic promoters and thermodynamic promoters, as well as physicochemical methods of adding porous materials to water, using porous material fixed beds, and using water-in-oil emulsions. Among them, kinetic promoters are generally considered to be more effective. Common kinetic promoters in laboratories include surfactants, amino acids, starch, etc. Chinese patent publication No. CN104974713A discloses a method for promoting the formation of hydrates by using amino acids. Chinese patent publication No. CN104857891A discloses a method for promoting the formation of hydrates by using cocamido propyl betaine, dimethylsiloxane, and non-ionic fluorosurfactant. Chinese patent publication No. CN108003952A discloses a non-surfactant type hydrate formation promoter. Although all of these methods can promote the formation of hydrates, there is a certain induction time in the formation of hydrates, and high pressure and long times are required to obtain hydrates with high gas uptake. In addition to the problem of formation rate, the hydrates formed under the acceleration of surfactants or amino acids usually have a behavior of adhering growth, which may cause problems of blocking the gas inlet or outlet of the reactor, increasing the apparent volume of the hydrate and the like in the actual production in future. US patent publication No. US2014/0363361A1 discloses a method for promoting the formation of hydrates using lignosulfonate. Although a fast rate of hydrate formation can be achieved at an initial pressure of about 9.5MPa, the formed hydrates have an obvious adhering growth phenomenon. In addition, the decomposition of hydrates formed under the promoting effect of surfactants is also problematic in serious foaming. US 2012/260680A1 relates to a fed-batch-type method for forming gas hydrate, which include injecting a fresh aqueous solution containing a potential feed hydrate and injecting pressurized gas into a reactor sequentially or simultaneously, then injecting a surfactant solution into the reactor. It also discloses a batch-type method for forming a gas hydrate according to the fed-batch-type method. However, the thermodynamic promoters used would decrease the theoretical capacity of gas in the hydrate, which could affect the practical use of the method; in addition, no solutions concerning hydrate-based gas storage and transportation and gas separation are discussed therein. Therefore, in order to realize the industrial application of hydrates in gas storage and transportation and gas separation, it is necessary to develop a new method for hydrate formation that has a fast hydrate formation rate, high gas storage density, controllable formation morphology, no bubble during decomposition, and a recyclable medium for formation.

**SUMMARY**

In view of the problems of slow formation rate, serious foam generation during hydrate decomposition, and low recycling efficiency of the formation medium in the hydrate industrial technology, especially in the hydrate-based gas storage and transportation and gas separation process, the first object of the present invention is to provide a method for preparing a medium for rapid hydrate formation; the second object of the present invention is to provide a medium for rapid hydrate formation prepared by the preparation method; the third object of the present invention is to provide the utilization of the medium for rapid hydrate formation in hydrate-based gas storage and transportation, hydrate-based gas separation or hydrate-based cold storage; the fourth object of the present invention is to provide a method for using the medium for rapid hydrate formation.

The objects of the present invention are achieved by the following technical solutions.

In one aspect, the present invention provides a method for preparing a medium for rapid hydrate formation, comprising:

formulating a kinetic promoter and water into an aqueous solution;

forming a primary hydrate by reacting the aqueous solution and a primary gas at an initial temperature greater than 0°C and less than 5°C, wherein most of the aqueous solution is converted to the primary hydrate, and the residual aqueous solution is invisible to naked eye;

decreasing the temperature of the primary hydrate obtained by the reaction, the residual aqueous solution and the remaining primary gas to a decomposition temperature of greater than -2.5°C and less than 0°C; discharging the remaining primary gas and keeping the pressure of the cooled primary hydrate and the frozen residual aqueous solution at or below atmospheric pressure; releasing the gas stored in the primary hydrate, and finally acquiring an ice substance, which is the medium for rapid hydrate formation.

By introducing a kinetic promoter, the present invention is capable of ensuring a fast formation rate for the primary hydrate; further, the ice substance produced by the dissociation of the primary hydrate is instrumental in providing rapid hydrate formation; the ice substance is porous, and when it is used as hydrate former below 0°C, it provides large contact area for gas and ice, bringing a high formation rate; meanwhile, the primary hydrate decomposes below 0°C, which can avoid the serious foam formation and improve the operability of the hydrate decomposition process; in addition, the frozen medium can effectively absorb the formation heat and maintain rapid formation rate when it is used in hydrate formation.

In the aforesaid preparation method, preferably, the kinetic promoter comprises one or more of sodium dodecyl sulfate, sodium tetradecyl sulfate, sodium hexadecyl sulfate, sodium dodecyl benzene sulfonate, leucine and L-methionine, but it is not limited thereto. The kinetic promoter of the present invention can allow the formed primary hydrate to have a porous morphology with a good formation rate; meanwhile, the water conversion during the formation of the primary hydrate could reach 60%, and no visible residual water could be found in the primary hydrate.

In the aforesaid preparation method, preferably, the mass concentration of the kinetic promoter in the aqueous solution is higher than 100 ppm.

In the aforesaid preparation method, preferably, the primary gas comprises one or more of methane, ethane, propane, ethylene and carbon dioxide, but it is not limited thereto.

In the aforesaid preparation method, preferably, the formation pressure of the primary hydrate is higher than the corresponding equilibrium pressure of the primary gas to form gas hydrate at the initial temperature. For example, the equilibrium pressure of methane hydrate is 3.9 MPa at 4°C, and when the initial temperature is fixed to 1°C and methane is used as the primary gas, the pressure of methane should be kept higher than 3.9 MPa.

In the aforesaid preparation method, the decomposition temperature below ice point is higher than -2.5°C and lower than 0°C.

In the aforesaid preparation method, preferably, it further comprises mechanically compressing the prepared medium for rapid hydrate formation at a temperature below the ice point to a volume of not less than 1.2 times the volume of the aqueous solution, so that the apparent volume of the medium for rapid hydrate formation is reduced and the compressed medium for rapid hydrate formation can avoid the adhering growth of hydrates.

In the aforesaid preparation method, preferably, the temperature of the medium for rapid hydrate formation during the mechanical compression is higher than or equal to -5°C and less than 0°C.

In another aspect, the present invention further provides a medium for rapid hydrate formation prepared by the aforesaid preparation method.

The medium for rapid hydrate formation prepared by present invention is preserved at a temperature lower than 0°C; preferably, it is preserved at a temperature of lower than 0°C and higher than -10°C. Because on one hand, a preservation temperature higher than 0°C will lead to the medium for rapid hydrate formation melting into an aqueous solution, causing it to fail in improving hydrate formation; on the other hand, a too low preservation temperature will consume more energy.

In a further aspect, the present invention also provides the use of the medium for rapid hydrate formation in hydrate-based gas storage and transportation, hydrate-based gas separation or hydrate-based cold storage.

In a still further aspect, the present invention also provides a method for using the medium for rapid hydrate formation, comprising:

directly contacting the medium for rapid hydrate formation with a target gas at a use temperature of greater than -2.5°C and less than 0°C, to achieve the storage and/or separation of the target gas; after which, regenerating the medium for rapid hydrate formation by decomposing the hydrate of target gas at a regeneration temperature of greater than -2.5°C and less than 0°C;

wherein during the use process, the partial pressure of the target component in the target gas is greater than the corresponding equilibrium pressure for the pure target component to form gas hydrate at the use temperature. The target component is the component which preferentially enters the hydrate phase. For example, when the medium for rapid hydrate formation is used to store methane and pure methane is the target gas, methane is the target component, and the pressure of methane should be greater than the phase equilibrium pressure of methane hydrate at the use temperature. When the medium for rapid hydrate formation is used to separate a methane-hydrogen mixed gas, methane is the target component having a phase equilibrium pressure which is much lower than that of the hydrogen hydrate; because methane preferentially enters the hydrate phase to form hydrates, while hydrogen can hardly form hydrates and then be enriched in the gas phase; thus, the partial pressure of methane in the mixed gas should be greater than the phase equilibrium pressure of methane hydrate at the use temperature.

The use of the medium for rapid hydrate formation of the present invention is similar to a porous adsorbent: both of them achieve gas storage and/or separation by contacting with the target gas under certain temperature and pressure conditions. And they could be regenerated through a decomposition or desorption step, so as to achieve the purpose of recycling.

The main difference between the medium for rapid hydrate formation of the present invention and the conventional porous absorbent in the use method is that the temperature of the medium for rapid hydrate formation of the present invention must be maintained below 0°C during the use, desorption, decomposition, preservation, and recycling, and during the use, the pressure of the target component in the target gas should be greater than the equilibrium pressure for the pure target component to form gas hydrate at the use temperature.

In the above use method, the use temperature for storage and/or separation of the target gas is greater than -2.5°C and less than 0°C.

In the above use method, the regeneration temperature for regenerating the medium for rapid hydrate formation by decomposition is greater than -2.5°C and less than 0°C.

In the above use method, the target gas is a gas that needs to be stored or separated, or is used for cold storage in industries, preferably, the target gas includes one or more of methane, carbon dioxide, natural gas, hydrogen, flue gas, biogas, coal bed gas, refinery gas, purge gas of synthetic ammonia plant, IGCC syngas, refrigerant R410, and refrigerant R507, but it is not limited thereto.

The present invention uses an aqueous solution of formation promoters to form a primary hydrate, and the primary hydrate decomposes below 0°C to form a special ice-like substance. The ice-like substance is used as a medium for rapid hydrate formation below 0°C, and it can provide a high formation rate, i.e., a hydrate yield of 80% can be achieved within 5 to 21 minutes. Meanwhile, the hydrate decomposes to ice and gas below 0°C, which can avoid the serious foam formation and improve the operability of the decomposition process. In addition, the compressed medium for rapid hydrate formation can avoid the adhering growth phenomenon of hydrates, and the medium for rapid hydrate formation stored at low temperature can be recycled. The medium for rapid hydrate formation of the present invention has a simple preparation process, is easy to operate, and is applicable to a wide range of target gas. It can be applied to hydrate-based gas storage and transportation, hydrate-based gas separation, and hydrate-based cold storage, and the application of it is fast, safe, and low-cost.

## BRIEF DESCRIPTION OF DRAWINGS

Figure 1 is a pressure drop curve during the formation of the primary hydrate in Example 1 of the present invention;

Figure 2 is a photograph showing the medium for rapid hydrate formation stored after compression in Example 1 of the present invention;

Figure 3 is a curve of pressure drop when the medium for rapid hydrate formation is used in natural gas storage in Example 1 of the present invention;

Figure 4 is a curve of pressure drop when the recycled medium for rapid hydrate formation is used in natural gas storage in Example 1 of the present invention;

Figure 5 is a curve of pressure drop when the medium for rapid hydrate formation is used in natural gas storage in Example 2 of the present invention;

Figure 6 is a curve of pressure drop when the medium for rapid hydrate formation is used in natural gas storage in Example 3 of the present invention;

Figure 7 is a curve of pressure drop when the medium for rapid hydrate formation is used in methane gas storage in Example 4 of the present invention;

Figure 8 is a curve of pressure drop when the medium for rapid hydrate formation is used in methane gas storage in Example 5 of the present invention;

Figure 9 is a curve of pressure drop when the medium for rapid hydrate formation is used in natural gas storage in Example 6 of the present invention;

Figure 10 is a curve of pressure drop when the medium for rapid hydrate formation is used in separating a methane-hydrogen mixed gas in Example 7 of the present invention;

Figure 11 is a curve of pressure drop when the medium for rapid hydrate formation is used in natural gas storage in Example 8 of the present invention;

Figure 12 is a curve of pressure drop when the medium for rapid hydrate formation is used in natural gas storage in Example 9 of the present invention;

Figure 13 is a curve of pressure drop during the methane hydrate formation in Comparative Example 1 of the present invention;

Figure 14 is a curve of pressure drop when the medium for rapid hydrate formation is used in natural gas storage in Comparative Example 2 of the present invention;

Figure 15 is a curve of pressure drop when the medium for rapid hydrate formation is used in natural gas storage in Comparative Example 3 of the present invention;

Figure 16 is a curve of pressure drop when the medium for rapid hydrate formation is used in natural gas storage in Comparative Example 4 of the present invention;

Figure 17 is a curve of pressure drop when the medium for rapid hydrate formation is used in natural gas storage in Comparative Example 5 of the present invention;

Figure 18 is a curve of pressure drop when the medium for hydrate formation is used in natural gas storage in Comparative Example 6 of the present invention;

Figure 19 is a curve of pressure drop when the medium for rapid hydrate formation is used in natural gas storage in Comparative Example 7 of the present invention.

## DETAILED DESCRIPTION OF THE PREFERRED EMBODIMENTS

In order to have a clearer understanding of the technical features, objectives, and beneficial effects of the present invention, the technical solutions of the present invention will now be described in details below, but it should not be understood as limiting the implementable scope of the present invention.

### Example 1:

This Example provides a method for preparing a medium for rapid hydrate formation comprising the following steps.

Sodium dodecyl sulfate and water were formulated into an aqueous solution of sodium dodecyl sulfate with a mass concentration of 600 ppm.

10 mL of the aqueous solution of sodium dodecyl sulfate was charged into an autoclave with a volume of 70ml, and the autoclave was mounted in an air bath, while a buffer tank for precooling gas was mounted in the air bath and connected with the autoclave through high-pressure pipelines and valves.

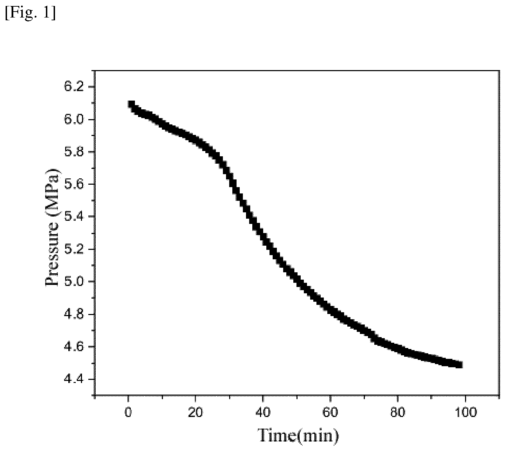

The temperature of the autoclave and the aqueous solution of sodium dodecyl sulfate therein was lowered to an initial temperature of 4°C, the autoclave was evacuated using a vacuum pump, and then methane gas precooled to 4°C in the buffer tank was charged into the autoclave, until the pressure of the methane gas in the autoclave reached 6 MPa. At this time, methane and the aqueous solution of sodium dodecyl sulfate formed a primary hydrate under static conditions, and timing was started when the hydrates were visible to the naked eyes; after 1 hour, no obvious liquid water remained in the autoclave. Figure 1 is a curve of pressure drop during the formation of primary hydrate.

2 hours after the primary hydrate started to form, the water conversion rate reached 90% or more, and the temperature of the autoclave and the methane hydrate, the residual aqueous solution of sodium dodecyl sulfate and the remaining methane gas therein was reduced to a decomposition temperature of -1°C, and the methane hydrate was cooled and the residual aqueous solution was frozen into ice. The remaining methane gas in the autoclave was discharged, and the pressure in the autoclave was kept at atmospheric pressure to decompose the hydrate, and the ice formed by freezing the residual aqueous solution was still stored in the autoclave. After 2 hours, most of the gas stored in the hydrate was released, while no foam formed during the decomposition of the hydrate. An ice-like substance was acquired after the decomposition, which was the medium for rapid hydrate formation.

The prepared medium for rapid hydrate formation was compressed, specifically as follows.

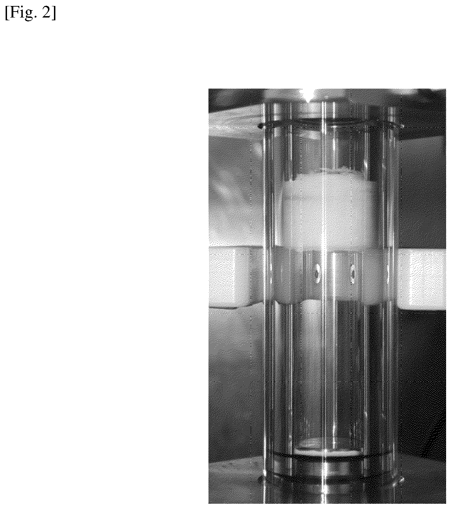

The temperature of the medium for rapid hydrate formation was maintained at -1°C, the pressure in the autoclave was maintained at atmospheric pressure, and the lid of the autoclave was opened. At this time, the medium for rapid hydrate formation is adhered to the wall of the autoclave. The medium for rapid hydrate formation was compressed with an iron pestle, pre-cooled to -1°C, to a volume of 13 ml to reduce its volume; then the medium for rapid hydrate formation was stored in the autoclave under atmospheric pressure, at -1°C as a preservation temperature. Figure 2 is a photograph of the medium for rapid hydrate formation, stored after compression.

This Example also provides a method for using the medium for rapid hydrate formation comprising the following steps.

The medium for rapid hydrate formation was used to store natural gas, at -1°C as a use temperature; the temperature of the medium for rapid hydrate formation stored in the autoclave was maintained at -1°C, and the autoclave was quickly charged with natural gas which was pre-cooled to -1°C, so that natural gas directly contacted with the medium for rapid hydrate formation.

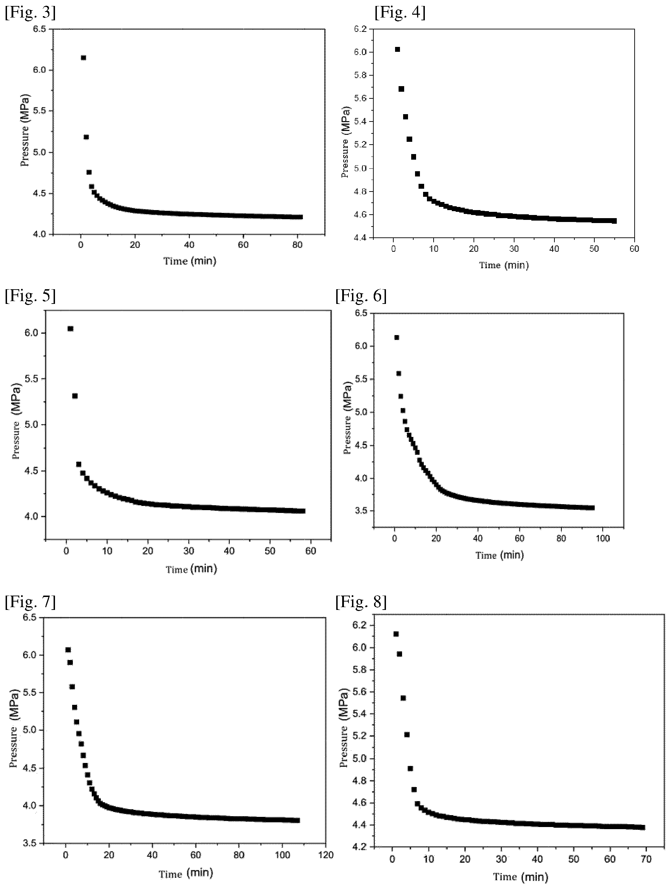

The hydrate began to form during the process of charging the autoclave with gas. When the pressure of natural gas reached about 6MPa, it is recorded as time 0 and the charge of natural gas was stopped. Figure 3 is a curve of pressure drop when the medium for rapid hydrate formation is used in natural gas storage. The consumption of gas during the formation of hydrate leads to a decrease in gas pressure, and the speed of gas pressure drop can characterize the hydrate formation rate to some extent. It can be seen from Figure 3 that the gas pressure drops rapidly when the autoclave is charged with gas to 6 MPa, and the pressure levels off at 20 min, indicating that the hydrate formation is substantially completed. The hydrate yield is calculated strictly through the conservation of reactant mass. Upon calculation, it takes 5 minutes for the natural gas hydrate yield to reach 80%.

When the storage of natural gas by the medium for rapid hydrate formation is completed, -1°C was chosen as the decomposition temperature; the temperature of the hydrate and remaining natural gas was maintained at -1°C, and the remaining natural gas in the autoclave was discharged, so that the pressure of the autoclave was maintained at atmospheric pressure. The hydrate was decomposed under atmospheric pressure. After 2 h, most of the gas in the hydrate was released, and the medium for rapid hydrate formation was recycled.

The recycled medium for rapid hydrate formation was used to store natural gas at -1°C as the use temperature, and the use process of the medium for rapid hydrate formation was repeated. Figure 4 is a curve of pressure drop when the recycled medium for rapid hydrate formation is used in natural gas storage. It can be seen that the gas pressure drops rapidly when the autoclave is charged with gas to 6 MPa, and the pressure levels off at 20 min, indicating that the hydrate formation is substantially completed. The hydrate yield is calculated strictly through the conservation of reactant mass. Upon calculation, it takes 6 minutes for the natural gas hydrate yield to reach 80%.

**Example 2:**

This Example provides a method for preparing a medium for rapid hydrate formation comprising the following steps.

Sodium hexadecyl sulfate and water were formulated into an aqueous solution of sodium hexadecyl sulfate with a mass concentration of 600 ppm.

10 mL of the aqueous solution of sodium hexadecyl sulfate was charged into an autoclave with a volume of 70ml, and the autoclave was mounted in an air bath, while a buffer tank for precooling gas was mounted in the air bath and connected with the autoclave through high-pressure pipelines and valves.

The temperature of the autoclave and the aqueous solution of sodium hexadecyl sulfate therein was lowered to an initial temperature of 2°C for hydrate formation, the autoclave was evacuated using a vacuum pump, and then methane gas pre-cooled to 2°C in the buffer tank was charged into the autoclave, until the pressure of the methane gas in the autoclave reached 6 MPa. At this time, methane and the aqueous solution of sodium hexadecyl sulfate formed a primary hydrate under static conditions, and timing was started when the hydrates were visible to the naked eyes; after 1.5 hour, no obvious liquid water remained in the autoclave.

2 hours after the formation of primary hydrate, the temperature of the autoclave and the methane hydrate, residual aqueous solution of sodium hexadecyl sulfate and remaining methane gas therein was reduced to a decomposition temperature of -1°C, and the methane hydrate was cooled and the residual aqueous solution was frozen into ice. The remaining methane gas in the autoclave was discharged, and the pressure in the autoclave was kept at atmospheric pressure to decompose the hydrate, and the ice formed by freezing the residual aqueous solution was still stored in the autoclave. After 2 hours, most of the gas stored in the hydrate was released, while no foam formed during the decomposition of the hydrate. An ice-like substance was acquired after the decomposition, which was the medium for rapid hydrate formation.

The prepared medium for rapid hydrate formation was compressed, specifically as follows.

The temperature of the medium for rapid hydrate formation was maintained at -1°C, the pressure in the autoclave was maintained at atmospheric pressure, and the lid of the autoclave was opened. At this time, the medium for rapid hydrate formation is adhered to the wall of the autoclave. The medium for rapid hydrate formation was compressed with an iron pestle, pre-cooled to -1°C, to a volume of 13ml to reduce its volume. Then the medium for rapid hydrate formation was stored in the autoclave under atmospheric pressure, at -1°C as a preservation temperature.

This Example also provides a method for using the medium for rapid hydrate formation comprising the following steps.

The medium for rapid hydrate formation was used to store natural gas, and -1°C was chosen as the use temperature. The temperature of the medium for rapid hydrate formation stored in the autoclave was maintained at -1°C, and the autoclave was quickly charged with natural gas which was pre-cooled to -1°C, so that natural gas directly contacted with the medium for rapid hydrate formation.

The hydrate began to form during the process of charging the autoclave with gas. When the pressure of natural gas reached about 6MPa, it is recorded as time 0 and the charge of natural gas was stopped. Figure 5 is a curve of pressure drop when the medium for rapid hydrate formation is used in natural gas storage. It can be seen that the gas pressure drops rapidly when the autoclave is charged with gas to 6 MPa, and the pressure levels off at 20 min, indicating that the hydrate formation is substantially completed. The hydrate yield is calculated strictly through the conservation of reactant mass. Upon calculation, it takes 14 minutes for the natural gas hydrate yield to reach 80%.

**Example 3:**

This Example provides a method for preparing a medium for rapid hydrate formation comprising the following steps.

Sodium dodecylbenzene sulfonate and water were formulated into an aqueous solution of sodium dodecylbenzene sulfonate with a mass concentration of 600 ppm.

10 mL of the aqueous solution of sodium dodecylbenzene sulfonate was charged into an autoclave with a volume of 70 ml, and the autoclave was mounted in an air bath, while a buffer tank for precooling gas was mounted in the air bath and connected with the autoclave through high-pressure pipelines and valves.

The temperature of the autoclave and the aqueous solution of sodium dodecylbenzene sulfonate therein was lowered to an initial temperature of 4°C for hydrate formation, the autoclave was evacuated using a vacuum pump, and then methane gas precooled to 4°C in the buffer tank was charged into the autoclave, until the pressure of the methane gas in the autoclave reached 6 MPa. At this time, methane and the aqueous solution of sodium dodecylbenzene sulfonate formed a primary hydrate under static conditions, and timing was started when the hydrates were visible to the naked eyes; after 1.5 hour, no obvious liquid water remained in the autoclave.

2.5 hours after the primary hydrate started to form, the temperature of the autoclave and the methane hydrate, the residual aqueous solution of sodium dodecylbenzene sulfonate and the remaining methane gas therein was reduced to a decomposition temperature of -1°C, and the methane hydrate was cooled and the residual aqueous solution was frozen into ice. The remaining methane gas in the autoclave was discharged, and the pressure in the autoclave was kept at atmospheric pressure to decompose the hydrate, and the ice formed by freezing the residual aqueous solution was still stored in the autoclave. After 2 hours, most of the gas stored in the hydrate was released, while no foam formed during the decomposition of the hydrate. An ice-like substance was acquired after the decomposition, which was the medium for rapid hydrate formation.

The prepared medium for rapid hydrate formation was compressed, specifically as follows.

The temperature of the medium for rapid hydrate formation was maintained at -1°C, the pressure in the autoclave was maintained at atmospheric pressure, and the lid of the autoclave was opened. At this time, the medium for rapid hydrate formation is adhered to the wall of the autoclave. The medium for rapid hydrate formation was compressed with an iron pestle, pre-cooled to -1°C, to a volume of 13ml to reduce its volume. Then the medium for rapid hydrate formation was stored in the autoclave under atmospheric pressure at -1°C as a preservation temperature.

This Example also provides a method for using the medium for rapid hydrate formation comprising the following steps.

The medium for rapid hydrate formation was used to store natural gas at -1°C as the use temperature. The temperature of the medium for rapid hydrate formation stored in the autoclave was maintained at -1°C, and the autoclave was quickly charged with natural gas which was pre-cooled to -1°C, so that natural gas directly contacted with the medium for rapid hydrate formation.

The hydrate began to form during the process of charging the autoclave with gas. When the pressure of natural gas reached about 6 MPa, it is recorded as time 0 and the charge of natural gas was stopped. Figure 6 is a curve of pressure drop when the medium for rapid hydrate formation is used in natural gas storage. It can be seen that the gas pressure drops rapidly when the autoclave is charged with gas to 6 MPa, and the pressure levels off at 35 min, indicating that the hydrate formation is substantially completed. The hydrate yield is calculated strictly through the conservation of reactant mass. Upon calculation, it takes 19 minutes for the natural gas hydrate yield to reach 80%.

**Example 4:**

This Example provides a method for preparing a medium for rapid hydrate formation comprising the following steps.

Sodium dodecyl sulfate and water were formulated into an aqueous solution of sodium dodecyl sulfate with a mass concentration of 600 ppm.

10 mL of the aqueous solution of sodium dodecyl sulfate was charged into an autoclave with a volume of 70 ml, and the autoclave was mounted in an air bath, while a buffer tank for precooling gas was mounted in the air bath and connected with the autoclave through high-pressure pipelines and valves.

The temperature of the autoclave and the aqueous solution of sodium dodecyl sulfate therein was lowered to an initial temperature of 4°C for hydrate formation, the autoclave was evacuated using a vacuum pump, and then carbon dioxide gas precooled to 4°C in the buffer tank was charged into the autoclave, until the pressure of the carbon dioxide gas in the autoclave reached 3 MPa. At this time, carbon dioxide and the aqueous solution of sodium dodecyl sulfate formed a primary hydrate under static conditions. In order to prevent the pressure of carbon dioxide from approaching the phase equilibrium pressure, carbon dioxide was continuously charged into the autoclave to maintain the pressure therein at 3MPa during the hydrate formation. Timing was started when the hydrates were visible to the naked eyes; after 2 hours, no obvious liquid water remained in the autoclave.

2.5 hours after the primary hydrate started to form, the temperature of the autoclave and the carbon dioxide hydrate, the residual aqueous solution of sodium dodecyl sulfate and the remaining carbon dioxide gas therein was reduced to a decomposition temperature of -1°C, and the carbon dioxide hydrate was cooled and the residual aqueous solution was frozen into ice. The remaining carbon dioxide gas in the autoclave was discharged, and the pressure in the autoclave was kept at atmospheric pressure to decompose the hydrate, and the ice formed by freezing the residual aqueous solution was still stored in the autoclave. After 2 hours, most of the gas stored in the hydrate was released, while no foam formed during the decomposition of the hydrate. An ice-like substance was acquired after the decomposition, which was the medium for rapid hydrate formation.

The prepared medium for rapid hydrate formation was compressed, specifically as follows.

The temperature of the medium for rapid hydrate formation was maintained at -1°C, the pressure in the autoclave was maintained at atmospheric pressure, and the lid of the autoclave was opened. At this time, the medium for rapid hydrate formation is adhered to the wall of the autoclave. The medium for rapid hydrate formation was compressed with an iron pestle, pre-cooled to -1°C, to a volume of 13ml to reduce its volume. Then the medium for rapid hydrate formation was stored in the autoclave under atmospheric pressure, at -1°C as a preservation temperature.

This Example also provides a method for using the medium for rapid hydrate formation comprising the following steps.

The medium for rapid hydrate formation was used to store methane at -1°C as the use temperature. The temperature of the medium for rapid hydrate formation stored in the autoclave was maintained at -1°C, and the autoclave was quickly charged with methane which was pre-cooled to -1°C, so that methane directly contacted with the medium for rapid hydrate formation.

The hydrate began to form during the process of charging the autoclave with gas. When the pressure of methane reached about 6 MPa, it is recorded as time 0 and the charge of methane was stopped. Figure 7 is a curve of pressure drop when the medium for rapid hydrate formation is used in methane storage. It can be seen that the gas pressure drops rapidly when the autoclave is charged with gas to 6 MPa, and the pressure levels off at 20 min, indicating that the hydrate formation is substantially completed. The hydrate yield is calculated strictly through the conservation of reactant mass. Upon calculation, it takes 7 minutes for the methane hydrate yield to reach 80%.

**Example 5:**

This Example provides a method for preparing a medium for rapid hydrate formation comprising the following steps.

Sodium dodecyl sulfate and water were formulated into an aqueous solution of sodium dodecyl sulfate with a mass concentration of 600 ppm.

10 mL of the aqueous solution of sodium dodecyl sulfate was charged into an autoclave with a volume of 70 ml, and the autoclave was mounted in an air bath, while a buffer tank for precooling gas was mounted in the air bath and connected with the autoclave through high-pressure pipelines and valves.

The temperature of the autoclave and the aqueous solution of sodium dodecyl sulfate therein was lowered to an initial temperature of 4°C for hydrate formation, the autoclave was evacuated using a vacuum pump, and then propane gas precooled to 4°C in the buffer tank was charged into the autoclave, until the pressure of the propane gas in the autoclave reached 0.5 MPa. At this time, propane and the aqueous solution of sodium dodecyl sulfate formed a primary hydrate under static conditions. In order to prevent the pressure of propane from approaching the phase equilibrium pressure, propane was continuously charged into the autoclave to maintain the pressure therein at 0.5 MPa during the hydrate formation. Timing was started when the hydrates were visible to the naked eyes; after 2 hours, no obvious liquid water remained in the autoclave.

2.5 hours after the formation of primary hydrate, the temperature of the autoclave and the propane hydrate, the residual aqueous solution of sodium dodecyl sulfate and the remaining propane gas therein was reduced to a decomposition temperature of -1°C, and the propane hydrate was cooled and the residual aqueous solution was frozen into ice. The remaining propane gas in the autoclave was discharged, and the pressure in the autoclave was kept at atmospheric pressure to decompose the hydrate, and the ice formed by freezing the residual aqueous solution was still stored in the autoclave. After 2 hours, most of the gas stored in the hydrate was released, while no foam formed during the decomposition of the hydrate. An ice-like substance was acquired after the decomposition, which was the medium for rapid hydrate formation.

The prepared medium for rapid hydrate formation was compressed, specifically as follows.

The temperature of the medium for rapid hydrate formation was maintained at -1°C, the pressure in the autoclave was maintained at atmospheric pressure, and the lid of the autoclave was opened. At this time, the medium for rapid hydrate formation is adhered to the wall of the autoclave. The medium for rapid hydrate formation was compressed with an iron pestle, pre-cooled to -1°C, to a volume of 13ml to reduce its volume. Then the medium for rapid hydrate formation was stored in the autoclave under atmospheric pressure at -1°C as a preservation temperature.

This Example also provides a method for using the medium for rapid hydrate formation comprising the following steps.

The medium for rapid hydrate formation was used to store methane at-1°C as the use temperature. The temperature of the medium for rapid hydrate formation stored in the autoclave was maintained at -1°C, and the autoclave was quickly charged with methane which was pre-cooled to -1°C, so that methane directly contacted with the medium for rapid hydrate formation.

The hydrate began to form during the process of charging the autoclave with gas. When the pressure of methane reached about 6MPa, it is recorded as time 0 and the charge of methane was stopped. Figure 8 is a curve of pressure drop when the medium for rapid hydrate formation is used in methane storage. It can be seen that the gas pressure drops rapidly when the autoclave is charged with gas to 6 MPa, and the gas pressure levels off at 10 min, indicating that the hydrate formation is substantially completed. The hydrate yield is calculated strictly through the conservation of reactant mass. Upon calculation, it takes 8 minutes for the methane hydrate yield to reach 80%.

**Example 6:**

This Example provides a method for preparing a medium for rapid hydrate formation comprising the following steps.

Sodium dodecyl sulfate and water were formulated into an aqueous solution of sodium dodecyl sulfate with a mass concentration of 600 ppm.

10 mL of the aqueous solution of sodium dodecyl sulfate was charged into an autoclave with a volume of 70 ml, and the autoclave was mounted in an air bath, while a buffer tank for precooling gas was mounted in the air bath and connected with the autoclave through high-pressure pipelines and valves.

The temperature of the autoclave and the aqueous solution of sodium dodecyl sulfate therein was lowered to an initial temperature of 4°C for hydrate formation, the autoclave was evacuated using a vacuum pump, and then a mixed gas of methane and carbon dioxide (methane:carbon dioxide = 0.8:0.2 in molar ratio) precooled to 4°C in the buffer tank was charged into the autoclave, until the pressure of the mixed gas in the autoclave reached 6 MPa. At this time, the mixture gas and the aqueous solution of sodium dodecyl sulfate formed a primary hydrate under static conditions, and timing was started when the hydrates were visible to the naked eyes; after 1 hour, no obvious liquid water remained in the autoclave.

2 hours after the primary hydrate started to form, the temperature of the autoclave and the methane-carbon dioxide hydrate, the residual aqueous solution of sodium dodecyl sulfate and the remaining mixed gas therein was reduced to a decomposition temperature of -1°C, and the methane-carbon dioxide binary hydrate was cooled and the residual aqueous solution was frozen into ice. The remaining methane-carbon dioxide mixture gas in the autoclave was discharged, and the pressure in the autoclave was kept at atmospheric pressure to decompose the hydrate, and the ice formed by freezing the residual aqueous solution was still stored in the autoclave. After 2 hours, most of the gas stored in the hydrate was released, while no foam formed during the decomposition of the hydrate. An ice-like substance was acquired after the decomposition, which was the medium for rapid hydrate formation.

The prepared medium for rapid hydrate formation was compressed, specifically as follows.

The temperature of the medium for rapid hydrate formation was maintained at -1°C, the pressure in the autoclave was maintained at atmospheric pressure, and the lid of the autoclave was opened. At this time, the medium for rapid hydrate formation is adhered to the wall of the autoclave. The medium for rapid hydrate formation was compressed with an iron pestle, pre-cooled to -1°C, to a volume of 13ml to reduce its volume. Then the medium for rapid hydrate formation was stored in the autoclave under atmospheric pressure at -1°C as a preservation temperature.

This Example also provides a method for using the medium for rapid hydrate formation comprising the following steps.

The medium for rapid hydrate formation was used to store natural gas at -1°C as the use temperature. The temperature of the medium for rapid hydrate formation stored in the autoclave was maintained at -1°C, and the autoclave was quickly charged with natural gas which was pre-cooled to -1°C, so that natural gas directly contacted with the medium for rapid hydrate formation.

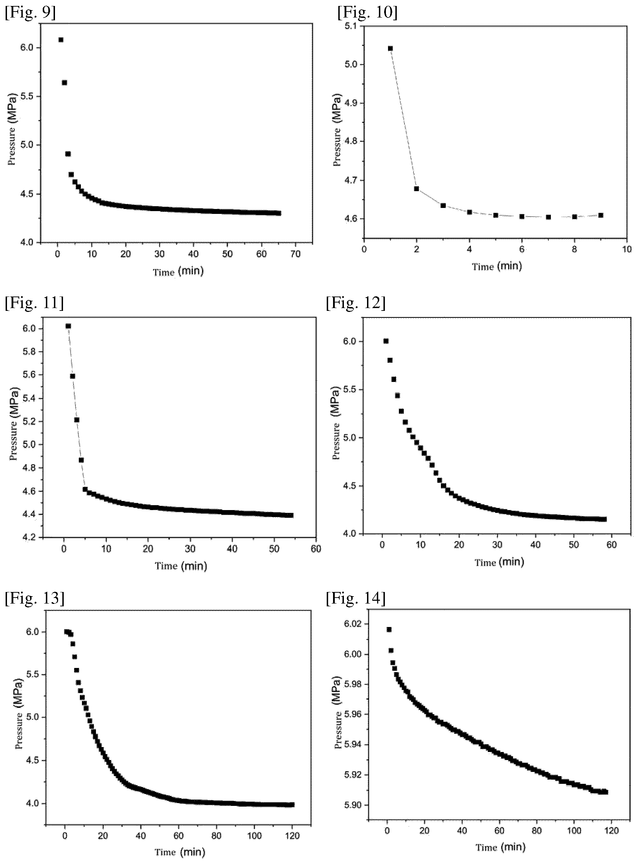

The hydrate began to form during the process of charging the autoclave with gas. When the pressure of natural gas reached about 6 MPa, it is recorded as time 0 and the charge of natural gas was stopped. Figure 9 is a curve of pressure drop when the medium for rapid hydrate formation is used in natural gas storage. It can be seen that the gas pressure drops rapidly when the autoclave is charged with gas to 6 MPa, and the gas pressure levels off at 15 min, indicating that the hydrate formation is substantially completed. The hydrate yield is calculated strictly through the conservation of reactant mass. Upon calculation, it takes 6 minutes for the natural gas hydrate yield to reach 80%.

**Example 7:**

This example provides a method for preparing a medium for rapid hydrate formation, which is the same as that of Example 1.

This Example also provides a method for using the medium for rapid hydrate formation comprising the following steps.

The medium for rapid hydrate formation was used to separate methane and hydrogen gas mixture at -1°C as the use temperature. The temperature of the medium for rapid hydrate formation stored in the autoclave was maintained at -1°C, and the autoclave was quickly charged with a mixed gas of methane and hydrogen to about 5 MPa (methane:hydrogen = 6:4 in molar ratio, which was pre-cooled to -1°C), , so that the gas mixture directly contacted with the medium for rapid hydrate formation.

When the mixed gas in the autoclave reached 5 MPa, the methane in the mixture gas formed a hydrate, and the gas pressure dropped rapidly. Figure 10 is a curve of pressure drop when the medium for rapid hydrate formation is used in separating gas mixture of methane and hydrogen. It takes about 5 minutes from the beginning of pressure drop to equilibrium. Due to the low partial pressure of methane, the hydrate yield is not calculated. Because hydrogen can hardly form a hydrate, the main gas components contained in the hydrate are methane gas and a small amount of hydrogen. Methane is enriched in the hydrate, and hydrogen is enriched in the gas phase, thus realizing the separation of methane and hydrogen. The separation performance can be represented by the separation factor, which is defined as

$$\frac{x_{CH_4}}{x_{H_2}} \bigg/ \frac{y_{CH_4}}{y_{H_2}}$$

, where x represents the molar fraction of the gas component contained in the hydrate, and y represents the molar fraction of the component in the gas phase. Larger separation factor indicates better separation effect of the two components. After 5 minutes of separation, the separation factor for methane reached 36.

**Example 8:**

This example provides a method for preparing a medium for rapid hydrate formation, which is the same as that of Example 1.
The prepared medium for rapid hydrate formation was compressed, specifically as follows.
The temperature of the medium for rapid hydrate formation was maintained at -5°C, the pressure in the autoclave was maintained at atmospheric pressure, and the lid of the autoclave was opened. At this time, At this time, the medium for rapid hydrate formation is adhered to the wall of the autoclave. The medium for rapid hydrate formation was compressed with an iron pestle, pre-cooled to -5°C, to a volume of 13 ml to reduce its volume. Then the medium for rapid hydrate formation was stored in the autoclave under atmospheric pressure at -5°C as a preservation temperature.
This Example also provides a method for using the medium for rapid hydrate formation comprising the following steps.
The medium for rapid hydrate formation was used to store natural gas at -1.5°C as the use temperature. The temperature of the medium for rapid hydrate formation stored in the autoclave was maintained at -1.5°C, and the autoclave was quickly charged with natural gas which was pre-cooled to -1.5°C, so that natural gas directly contacted with the medium for rapid hydrate formation.
The hydrate began to form during the process of charging the autoclave with gas. When the pressure of natural gas reached about 6 MPa, it is recorded as time 0 and the charge of natural gas was stopped. Figure 11 is a curve of pressure drop when the medium for rapid hydrate formation is used in natural gas storage. It can be seen that the gas pressure drops rapidly when the autoclave is charged with gas to 6 MPa, and the gas pressure levels off at 20 min, indicating that the hydrate formation is substantially completed. The hydrate yield is calculated strictly through the conservation of reactant mass. Upon calculation, it takes 16 minutes for the natural gas hydrate yield to reach 80%.

**Example 9:**

This Example provides a method for preparing a medium for rapid hydrate formation comprising the following steps.
Leucine and water were formulated into an aqueous solution with a mass concentration of 0.3 wt%.
10 mL of the aqueous solution was charged into an autoclave with a volume of 70 ml, and the autoclave was mounted in an air bath, while a buffer tank for precooling gas was mounted in the air bath and connected with the autoclave through high-pressure pipelines and valves.
The temperature of the autoclave and the aqueous solution therein was lowered to an initial temperature of 2°C for hydrate formation, the autoclave was evacuated using a vacuum pump, and then methane gas pre-cooled to 2°C in the buffer tank was charged into the autoclave, until the pressure of the methane gas in the autoclave reached 6 MPa. At this time, methane and the aqueous leucine solution formed a primary hydrate under static conditions, and timing was started when the hydrates were visible to the naked eyes; after 1 hour, no obvious liquid water remained in the autoclave.
2 hours after the primary hydrate started to form, the temperature of the autoclave and the methane hydrate, the residual aqueous solution of leucine and the remaining methane gas therein was reduced to a decomposition temperature of -1°C, and the methane hydrate was cooled and the residual aqueous solution was frozen into ice. The remaining methane gas in the autoclave was discharged, and the pressure in the autoclave was kept at atmospheric pressure to decompose the hydrate, and the ice formed by freezing the residual aqueous solution was still stored in the autoclave. After 2 hours, most of the gas stored in the hydrate was released, while no foam formed during the decomposition of the hydrate. An ice-like substance was acquired after the decomposition, which was the medium for rapid hydrate formation.
The prepared medium for rapid hydrate formation was compressed, specifically as follows.
The temperature of the medium for rapid hydrate formation was maintained at -1°C, the pressure in the autoclave was maintained at atmospheric pressure, and the lid of the autoclave was opened. At this time, the medium for rapid hydrate formation is adhered to the wall of the autoclave. The medium for rapid hydrate formation was compressed with an iron pestle, pre-cooled to -1°C, to a volume of 13ml to reduce its volume. Then the medium for rapid hydrate formation was stored in the autoclave under atmospheric pressure at -1°C as a preservation temperature.

This Example also provides a method for using the medium for rapid hydrate formation comprising the following steps.

The medium for rapid hydrate formation was used to store natural gas at -2°C as the use temperature. The temperature of the medium for rapid hydrate formation stored in the autoclave was maintained at -2°C, and the autoclave was quickly charged with natural gas which was pre-cooled to -2°C, so that natural gas directly contacted with the medium for rapid hydrate formation.

The hydrate began to form during the process of charging the autoclave with gas. When the pressure of natural gas reached about 6 MPa, it is recorded as time 0 and the charge of natural gas was stopped. Figure 12 is a curve of pressure drop when the medium for rapid hydrate formation is used in natural gas storage. It can be seen that the gas pressure drops rapidly when the autoclave is charged with gas to 6 MPa, and the gas pressure levels off at 35 min, indicating that the hydrate formation is substantially completed. The hydrate yield is calculated strictly through the conservation of reactant mass. Upon calculation, it takes 21 minutes for the natural gas hydrate yield to reach 80%.

**Comparative Example 1:**

This Comparative Example uses a method of directly forming hydrate in an aqueous solution of kinetic promoter for storing methane. Specific methods include the following steps.

Sodium dodecyl sulfate and water were formulated into an aqueous solution of sodium dodecyl sulfate with a mass concentration of 600 ppm.

10 mL of the aqueous solution of sodium dodecyl sulfate was charged into an autoclave with a volume of 70 ml, and the autoclave was mounted in an air bath, while a buffer tank for precooling gas was mounted in the air bath and connected with the autoclave through high-pressure pipelines and valves.

The temperature of the autoclave and the aqueous solution of sodium dodecyl sulfate therein was lowered to an initial temperature of 0.1 °C for hydrate formation, the autoclave was evacuated using a vacuum pump, and then methane gas precooled to 0.1°C in the buffer tank was charged into the autoclave, until the pressure of the methane gas in the autoclave reached 6 MPa. Then, methane and the aqueous solution of sodium dodecyl sulfate formed methane hydrate under static conditions.

Figure 13 is a curve of pressure drop during formation of methane hydrate. It can be seen that there is an induction time of about 3 minutes before hydrate begins to form. After about 60 minutes, the gas pressure levels off, indicating that the hydrate formation is substantially completed. The hydrate yield is calculated strictly through the conservation of reactant mass. Upon calculation, it takes 42 minutes for the methane hydrate yield to reach 80%.

**Comparative example 2:**

This Comparative Example prepares a nice substance for hydrate formation without a kinetic promoter, and the specific method includes the following steps.

10 mL of deionized water was charged into an autoclave with a volume of 70 ml, and the autoclave was mounted in an air bath, while a buffer tank for precooling gas was mounted in the air bath and connected with the autoclave through high-pressure pipelines and valves.

The temperature of the autoclave and the deionized water therein was lowered to an initial temperature of 4°C for hydrate formation, the autoclave was evacuated using a vacuum pump, and then methane gas precooled to 4°C in the buffer tank was charged into the autoclave, until the pressure of the methane gas in the autoclave reached 6 MPa. Due to the difficulty of static formation of hydrate in pure water, stirring was adopted to accelerate the hydrate formation. The timing was started when the hydrate was visible to naked eyes. After 3 hours, there was no obvious liquid water remaining in the autoclave.

5 hours after the primary hydrate started to form, the temperature of the autoclave and the methane hydrate, the residual deionized water and remaining methane gas therein was reduced to a decomposition temperature of -1°C, and the methane hydrate was cooled and the residual water was frozen into ice. The remaining methane gas in the autoclave was discharged, and the pressure in the autoclave was kept at atmospheric pressure to decompose the hydrate, and the ice formed by freezing the residual water was still stored in the autoclave. After 3 hours, most of the gas stored in the hydrate was released, while no foam formed during the decomposition of the hydrate. An ice-like substance was acquired after the decomposition, which was the ice substance for hydrate formation prepared in this Comparative Example.

The prepared ice substance for hydrate formation was compressed, specifically as follows.

The temperature of the ice substance for hydrate formation was maintained at -1°C, the pressure in the autoclave was maintained at atmospheric pressure, and the lid of the autoclave was opened. The ice substance for hydrate formation was compressed with an iron pestle, pre-cooled to -1°C, to a volume of 13ml to reduce its volume. Then the ice substance for hydrate formation was stored in the autoclave under atmospheric pressure at -1°C as a preservation temperature.

This Example also provides a method for using the ice substance for hydrate formation comprising the following steps.

The ice substance for hydrate formation was used to store natural gas at -1°C as the use temperature. The temperature of the ice substance for hydrate formation stored in the autoclave was maintained at -1°C, and the autoclave was quickly charged with natural gas which was pre-cooled to -1°C, so that natural gas directly contacted with the ice substance for hydrate formation.

When the pressure of natural gas reached about 6 MPa, it was recorded as time 0 and the charge of natural gas was stopped. Figure 14 is a curve of pressure drop when the ice substance for hydrate formation is used in natural gas storage. It can be seen that the pressure drops slowly when the autoclave is charged with gas to 6 MPa, and the pressure in the autoclave is still as high as 5.91 MPa at 120 min, indicating that only a small amount of gas is consumed during the hydrate formation. The hydrate yield is calculated strictly through the conservation of reactant mass. Upon calculation, the natural gas hydrate yield after 120 minutes is only 7.8%.

**Comparative example 3:**

During the preparation of the medium for hydrate formation in this Comparative Example, the decomposition temperature is controlled to be higher than 0°C. The specific methods include the following steps.

Sodium dodecyl sulfate and water were formulated into an aqueous solution of sodium dodecyl sulfate with a mass concentration of 600 ppm.

10 mL of the aqueous solution of sodium dodecyl sulfate was charged into an autoclave with a volume of 70 ml, and the autoclave was mounted in an air bath, while a buffer tank for precooling gas was mounted in the air bath and connected with the autoclave through high-pressure pipelines and valves.

The temperature of the autoclave and the aqueous solution of sodium dodecyl sulfate therein was lowered to an initial temperature of 4°C for hydrate formation, the autoclave was evacuated using a vacuum pump, and then methane gas precooled to 4°C in the buffer tank was charged into the autoclave, until the pressure of the methane gas in the autoclave reached 6 MPa. At this time, methane and the aqueous solution of sodium dodecyl sulfate formed a primary hydrate under static conditions, and timing was started when the hydrates were visible to the naked eyes; after 1 hour, no obvious liquid water remained in the autoclave.

2 hours after the primary hydrate started to form, the temperature of the autoclave and the methane hydrate, the residual aqueous solution of sodium dodecyl sulfate and the remaining methane gas therein was reduced to a decomposition temperature of 1°C. The remaining methane gas in the autoclave was discharged, and the pressure in the autoclave was kept at atmospheric pressure to decompose the hydrate, and the residual aqueous solution was still stored as liquid in the autoclave. After 1 hour, most of the gas stored in the hydrate was released, and a large amount of foams formed during the decomposition of the hydrate. An aqueous solution was acquired after the hydrate decomposition, which was the medium for hydrate formation prepared in this Comparative Example.

The medium for hydrate formation prepared in this Comparative Example was stored in an autoclave under atmospheric pressure at 1°C as the preservation temperature.

This Comparative Example also provides a method for using the medium for hydrate formation comprising the following steps.

The medium for hydrate formation was used to store natural gas at 1°C as the use temperature. The temperature of the medium for hydrate formation stored in the autoclave was maintained at 1°C, and the autoclave was quickly charged with natural gas which was pre-cooled to 1°C, so that natural gas directly contacted with the medium for hydrate formation.

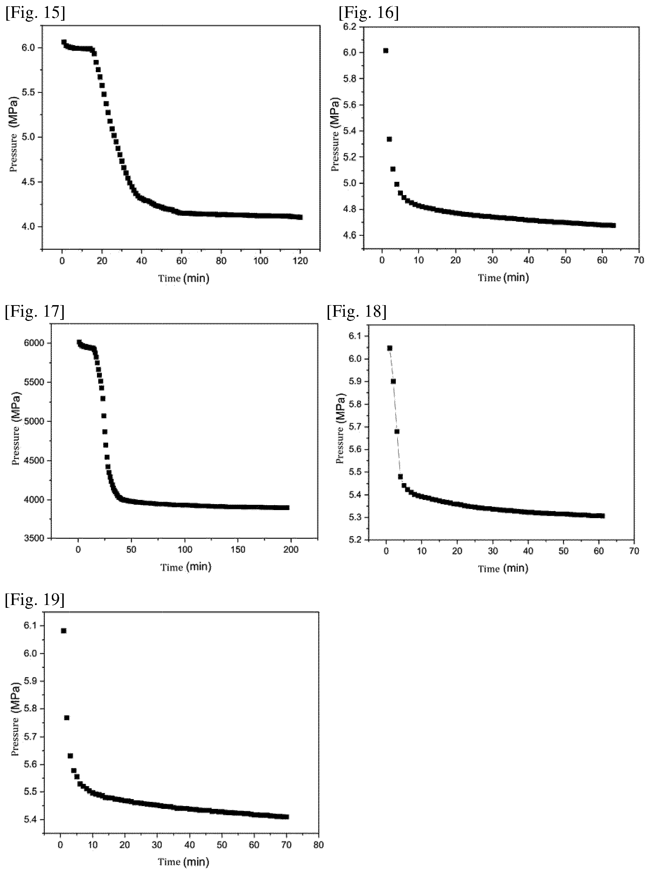

When the pressure of natural gas reached about 6 MPa, it was recorded as time 0 and the charge of natural gas was stopped. Figure 15 is a curve of pressure drop when the medium for hydrate formation is used in natural gas storage. It can be seen that the formation of natural gas hydrates begins after a 16-minute induction period, and the natural gas pressure levels off at 60 minutes, indicating that the hydrate formation is substantially completed. The hydrate yield is calculated strictly through the conservation of reactant mass. Upon calculation, it takes 45 minutes for the natural gas hydrate yield to reach 80%. The phenomenon of adheringgrowth exists during the hydrate formation.

**Comparative example 4:**

During the preparation of the medium for hydrate formation in this Comparative Example, the decomposition temperature is controlled to be -5°C and further increased to -1°C. The specific methods include the following steps.

Sodium dodecyl sulfate and water were formulated into an aqueous solution of sodium dodecyl sulfate with a mass concentration of 600 ppm.

10 mL of the aqueous solution of sodium dodecyl sulfate was charged into an autoclave with a volume of 70 ml, and the autoclave was mounted in an air bath, while a buffer tank for precooling gas was mounted in the air bath and connected with the autoclave through high-pressure pipelines and valves.

The temperature of the autoclave and the aqueous solution of sodium dodecyl sulfate therein was lowered to an initial temperature of 4°C for hydrate formation, the autoclave was evacuated using a vacuum pump, and then methane gas precooled to 4°C in the buffer tank was charged into the autoclave, until the pressure of the methane gas in the autoclave reached 6 MPa. At this time, methane and the aqueous solution of sodium dodecyl sulfate formed a primary hydrate under static conditions, and timing was started when the hydrates were visible to the naked eyes; after 1 hour, no obvious liquid water remained in the autoclave.

2 hours after the formation of primary hydrate, the temperature of the autoclave and the methane hydrate, the residual aqueous solution of sodium dodecyl sulfate and the remaining methane gas therein was reduced to a decomposition temperature of -5°C, and the methane hydrate was cooled and the residual aqueous solution was frozen into ice. The remaining methane gas in the autoclave was discharged, and the pressure in the autoclave was kept at atmospheric pressure to decompose the hydrate, and the ice formed by freezing the residual aqueous solution was still stored in the autoclave. After 72 hours, a large amount of gas stored in the hydrate was not released.

Further, the temperature of the medium for hydrate formation was increased to -1°C to continue to decompose the hydrate for 2 hours; there was no foam during the hydrate decomposition. An ice-like substance was acquired after the hydrate decomposition, which was the medium for hydrate formation of this Comparative Example.

The medium for hydrate formation was stored in an autoclave under atmospheric pressure at -1°C as the preservation temperature.

This Comparative Example also provides a method for using the medium for hydrate formation comprising the following steps.

The medium for hydrate formation was used to store natural gas at -1°C as the use temperature. The temperature of the medium for hydrate formation stored in the autoclave was maintained at -1°C, and the autoclave was quickly charted with natural gas which was pre-cooled to -1°C, so that natural gas directly contacted with the medium for hydrate formation.

The hydrate began to form during the process of charging the autoclave with gas. When the pressure of natural gas reached about 6MPa, it is recorded as time 0 and the charge of natural gas was stopped. Figure 16 is a curve of pressure drop when the medium for hydrate formation is used in natural gas storage. It can be seen that the gas pressure drops rapidly when the autoclave is charged with gas to 6 MPa, and the gas pressure levels off at 10 min, indicating that the hydrate formation is substantially completed. The hydrate yield is calculated strictly through the conservation of reactant mass. Upon calculation, it takes 8 minutes for the natural gas hydrate yield to reach 80%, but the decomposition of the primary hydrate takes more than 72 hours.

**Comparative Example 5:**

The medium for hydrate formation prepared in Comparative Example 3 was used. It was cooled to -1°C, and stored in an autoclave under atmospheric pressure at -1°C as the preservation temperature. After 10 hours, the medium for hydrate formation still existed in liquid form.

This Comparative Example also provides a method for using the medium for hydrate formation comprising the following steps.

The medium for hydrate formation was used to store natural gas at -1°C as the use temperature. The temperature of the medium for hydrate formation stored in the autoclave was maintained at -1°C, and the autoclave was quickly charged with natural gas which was pre-cooled to -1°C, so that natural gas directly contacted with the medium for hydrate formation.

When the pressure of natural gas reached about 6 MPa, it was recorded as time 0 and the charge of natural gas was stopped. Figure 17 is a curve of pressure drop when the medium for hydrate formation is used in natural gas storage. It can be seen that the natural gas hydrate begins to form after an induction period of 15 minutes when the autoclave is charged with gas to 6MPa, and the gas pressure levels off at 37 min, indicating that the hydrate formation is substantially completed. The hydrate yield is calculated strictly through the conservation of reactant mass. Upon calculation, it takes 32 minutes for the natural gas hydrate yield to reach 80%. The phenomenon of adhering growth exists during the hydrate formation.

**Comparative Example 6:**

During the preparation of the medium for hydrate formation in this Comparative Example, the decomposition temperature is controlled to be -3°C. The specific methods include the following steps.

Sodium dodecyl sulfate and water were formulated into an aqueous solution of sodium dodecyl sulfate with a mass concentration of 600 ppm.

10 mL of the aqueous solution of sodium dodecyl sulfate was charged into an autoclave with a volume of 70ml, and the autoclave was mounted in an air bath, while a buffer tank for precooling gas was mounted in the air bath and connected with the autoclave through high-pressure pipelines and valves.

The temperature of the autoclave and the aqueous solution of sodium dodecyl sulfate therein was lowered to an initial temperature of 4°C for hydrate formation, the autoclave was evacuated using a vacuum pump, and then methane gas precooled to 4°C in the buffer tank was charged into the autoclave, until the pressure of the methane gas in the autoclave reached 6 MPa. At this time, methane and the aqueous solution of sodium dodecyl sulfate formed a primary hydrate under static conditions, and timing was started when the hydrates were visible to the naked eyes; after 1 hour, no obvious liquid water remained in the autoclave.

2 hours after the formation of primary hydrate, the temperature of the autoclave and the methane hydrate, the residual aqueous solution of sodium dodecyl sulfate and the remaining methane gas therein was reduced to a decomposition temperature of -3°C. The remaining methane gas in the autoclave was discharged, and the pressure in the autoclave was kept at atmospheric pressure to decompose the hydrate. After 24 hours, a part of methane stored in the hydrate was not released, and no foam formed during the decomposition of the hydrate. An ice-like substance was acquired after the hydrate decomposition, which was the medium for hydrate formation prepared in this Comparative Example.

The prepared medium for hydrate formation was compressed, specifically as follows.

The temperature of the medium for hydrate formation was reduced to -9°C, the pressure in the autoclave was maintained at atmospheric pressure, and the lid of the autoclave was opened. The medium for hydrate formation was compressed with an iron pestle, pre-cooled to -9°C, to a volume of 13 ml to reduce its volume. Then the medium for rapid hydrate formation was stored in the autoclave under atmospheric pressure at -9°C as the preservation temperature.

This Comparative Example also provides a method for using the medium for hydrate formation comprising the following steps.

The medium for hydrate formation was used to store natural gas with -3°C as the use temperature. The temperature of the medium for hydrate formation stored in the autoclave was increased to -3°C, and the autoclave was quickly charged with natural gas which was pre-cooled to -3°C, so that natural gas directly contacted with the medium for hydrate formation.

When the pressure of natural gas reached about 6 MPa, it was recorded as time 0 and the charge of natural gas was stopped. Figure 18 is a curve of pressure drop when the medium for hydrate formation is used in natural gas storage. It can be seen that the pressure drops rapidly when the autoclave is charged with gas to 6 MPa, and the gas pressure levels off at 70 min, but the pressure in the autoclave is still as high as 5.4 MPa, indicating that only a small amount of gas is consumed during the hydrate formation. The hydrate yield is calculated strictly through the conservation of reactant mass. Upon calculation, the natural gas hydrate yield after 60 minutes is only 55%.

**Comparative Example 7:**

In this Comparative Example, the medium for rapid hydrate formation prepared in Example 1 is used, and the medium for rapid hydrate formation is stored at the preservation temperature of Example 1.

The difference between this Comparative Example and Example 1 lies in the use temperature. The method for using the medium for rapid hydrate formation of this Comparative Example includes the following steps.

The medium for rapid hydrate formation was used to store natural gas at -5°C as the use temperature. The temperature of the medium for rapid hydrate formation stored in the autoclave was maintained at -5°C, and the autoclave was quickly charged with natural gas which was pre-cooled to -5°C, so that natural gas directly contacted with the medium for rapid hydrate formation.

When the pressure of natural gas reached about 6 MPa, it was recorded as time 0 and the charge of natural gas was stopped. Figure 19 is a curve of pressure drop when the medium for rapid hydrate formation is used in natural gas storage. It can be seen that the pressure drops rapidly when the autoclave is charged with gas to 6 MPa, and the gas pressure levels off at 10 min, but the pressure in the autoclave is still as high as 5.47 MPa, indicating that only a small amount of gas is consumed during the hydrate formation. The hydrate yield is calculated strictly through the conservation of reactant mass. Upon calculation, the natural gas hydrate yield after 60 minutes is only 37%.

The following conclusions may be drawn from the above comparison.

In Examples 1-9, in the medium for rapid hydrate formation provided by the present invention, it takes 5-21 minutes for the hydrate yield to reach 80%, only 5 minutes at the fastest, and no foam is generated during the decomposition; the regenerated hydrate is in a regularly cylindrical shape, and there is no phenomenon of adhering growth. In Example 7, the medium for rapid hydrate formation is also has a good hydrate formation rate and gas separation rate, when it is used for gas separation.

By comparing Examples 1 to 9 with Comparative Example 1, when the aqueous solution of a kinetic promoter is directly used for hydrate formation in Comparative Example 1, it takes 42 minutes for the hydrate yield to reach 80%; while in the medium for rapid hydrate formation provided by the present invention, it takes 5 to 21 minutes for the hydrate yield to reach 80%, only 5 minutes at the fastest.

By comparing Examples 1 to 9 with Comparative Example 2, when the ice substance for hydrate formation prepared from pure water without a kinetic promoter is used for hydrate formation in Comparative Example 2, the hydrate yield after 120 minutes is only 7.8%; while in the medium for rapid hydrate formation provided by the present invention, it takes 5 to 21 minutes for the hydrate yield to reach 80%, only 5 minutes at the fastest.

By comparing Examples 1 to 9 with Comparative Example 3, the primary hydrate formed in Comparative Example 3 decomposes at a decomposition temperature higher than 0°C, producing a large amount of foam, and when the resultant aqueous solution is used to reform the hydrate, it takes 45 minutes for the hydrate yield to reach 80%, and the phenomenon of adhering growth exists; while in Examples 1 to 9, the primary hydrate decomposes below the freezing point and no foam formed. When the prepared medium for rapid hydrate formation is used for hydrate formation, it takes 5 to 21 minutes for the hydrate yield to reach 80%, only 5 minutes at the fastest, and the produced hydrate is in a regularly cylindrical shape, meanwhile, there is no phenomenon of adhering growth.

By comparing Examples 1 to 9 with Comparative Example 4, the media for hydrate rapid formation prepared in Comparative Example 4 and Examples 1 to 9 all have a fast speed when they were used for hydrate formation, but the primary hydrate formed in Comparative Example 4 decomposes at -5°C, and the decomposition takes more than 72 hours; while the primary hydrates formed in Examples 1-9 decompose within the decomposition temperature range provided by the present invention, and the decomposition takes 2 hours.

By comparing Examples 1 to 9 with Comparative Example 5, the primary hydrate formed in Comparative Example 5 decomposes at 1°C, and then was stored and used at a temperature of -1°C. A large amount of foam formed during the hydrate decomposition; when the resultant medium for hydrate formation is used for hydrate formation, it takes 32 minutes for the hydrate yield to reach 80%, and the phenomenon of adhering growth exists. In Examples 1 to 9, the decomposition temperature, preservation temperature and use temperature are always maintained at a temperature below 0°C provided by the present invention, and when the prepared medium for rapid hydrate formation is used for hydrate formation, it takes 5 to 21 minutes for the hydrate yield to reach 80%, only 5 minutes at the fastest, and the produced hydrate is in a regularly cylindrical shape, and there is no phenomenon of adhering growth.

By comparing Examples 1 to 9 with Comparative Example 6, the decomposition temperature, preservation temperature, and use temperature in Comparative Example 6 are all below 0°C, but lower than the minimum temperature provided by the present invention. When the prepared medium for hydrate formation is used for hydrate formation, the hydrate yield after 60 minutes is only 55%. In Examples 1 to 9, the decomposition temperature, preservation temperature and use temperature are all in the temperature range provided by the present invention, and when the prepared medium for rapid hydrate formation is used for hydrate formation, it takes 5 to 21 minutes for the hydrate yield to reach 80%, only 5 minutes at the fastest.

By comparing Examples 1 to 9 with Comparative Example 7, the decomposition temperature, and preservation temperature in Comparative Example 7 are all in the temperature range provided by the present invention, but the use temperature of the medium for rapid hydrate formation is lower than the minimum temperature provided by the present invention. When the prepared medium for hydrate formation is used for hydrate formation, the hydrate yield after 60 minutes is only 37%. In Examples 1 to 9, the decomposition temperature, preservation temperature and use temperature are all in the temperature range provided by the present invention, and when the prepared medium for rapid hydrate formation is used for hydrate formation, it takes 5 to 21 minutes for the hydrate yield to reach 80%, only 5 minutes at the fastest.

**Claims**

1. A method for preparing a medium for rapid hydrate formation, comprising:

   formulating a kinetic promoter and water into an aqueous solution;
   forming a primary hydrate by reacting the aqueous solution and a primary gas at an initial temperature greater than 0°C and less than 5°C;
   decreasing the temperature of the primary hydrate obtained by the reaction, the residual aqueous solution and the remaining primary gas to a decomposition temperature of greater than -2.5°C and less than 0°C; discharging the remaining primary gas and keeping the pressure of the cooled primary hydrate and the frozen residual aqueous solution at or below atmospheric pressure; releasing the gas stored in the primary hydrate, and finally acquiring an ice substance, which is the medium for rapid hydrate formation.

2. The method according to claim 1, wherein the kinetic promoter comprises one or more of sodium dodecyl sulfate, sodium tetradecyl sulfate, sodium hexadecyl sulfate, sodium dodecyl benzene sulfonate, leucine and L-methionine;
   preferably, the mass concentration of the kinetic promoter in the aqueous solution is greater than 100 ppm.

3. The method according to claim 1, wherein the primary gas comprises one or more of methane, ethane, propane, ethylene and carbon dioxide.

4. The method according to claim 1, wherein the formation pressure of the primary hydrate is higher than the corresponding equilibrium pressure of the primary gas to form gas hydrate at the initial temperature.

5. The method according to claim 1, further comprising mechanically compressing the prepared medium for rapid hydrate formation at a temperature below the icepoint, to a volume of not less than 1.2 times the volume of the aqueous solution;
   preferably, the temperature during the mechanical compression is controlled to be higher than or equal to -5°C and less than 0°C.

6. A medium for rapid hydrate formation prepared by the method according to any one of claims 1 to 5.

7. Use of the medium for rapid hydrate formation according to claim 6 in hydrate-based gas storage and transportation, hydrate-based gas separation or hydrate-based cold storage.

8. A method for using a medium for rapid hydrate formation, comprising:

directly contacting the medium for rapid hydrate formation according to claim 6 with a target gas at a use temperature of greater than -2.5°C and less than 0°C, to achieve the storage and/or separation of the target gas, after which, regenerating of the medium for rapid hydrate formation by decomposing the hydrate of target gas at a temperature of greater than -2.5°C and less than 0°C;

wherein during the use process, the partial pressure of a target component in the target gas is greater than the corresponding equilibrium pressure of the pure target component to form gas hydrate at the use temperature, and the target component is a component which preferentially enters the hydrate phase.

9. The method according to claim 8, wherein the target gas includes one or more of methane, carbon dioxide, natural gas, hydrogen, flue gas, biogas, coal bed gas, refinery gas, purge gas of synthetic ammonia plant, IGCC syngas, refrigerant R410, and refrigerant R507.

**Patentansprüche**

1. Verfahren zum Herstellen eines Mediums für schnelle Hydratbildung, umfassend:

Formulieren eines kinetischen Promotors und von Wasser zu einer wässrigen Lösung;
Bilden eines primären Hydrats, indem die wässrige Lösung und ein primäres Gas bei einer Anfangstemperatur größer als 0 °C und geringer als 5 °C reagiert werden;
Verringern der Temperatur des durch die Reaktion erhaltenen primären Hydrats, der restlichen wässrigen Lösung und des restlichen primären Gases auf eine Zersetzungstemperatur größer als -2,5 °C und geringer als 0 °C; Ausstoßen des restlichen primären Gases und Beibehalten des Drucks des gekühlten primären Hydrats und der gefrorenen restlichen wässrigen Lösung bei oder unter atmosphärischem Druck; Freisetzen des in dem primären Hydrat gespeicherten Gases und schließlich Gewinnen einer Eissubstanz, die das Medium zur schnellen Hydratbildung ist.

2. Verfahren nach Anspruch 1, wobei der kinetische Promoter eines oder mehrere von Natriumdodecylsulfat, Natriumtetradecylsulfat, Natriumhexadecylsulfat, Natriumdodecylbenzolsulfonat, Leucin und L-Methionin umfasst;
wobei bevorzugt die Massekonzentration des kinetischen Promotors in der wässrigen Lösung größer als 100 ppm ist.

3. Verfahren nach Anspruch 1, wobei das primäre Gas eines oder mehrere von Methan, Ethan, Propan, Ethylen und Kohlendioxid umfasst.

4. Verfahren nach Anspruch 1, wobei der Bildungsdruck des primären Hydrats höher als der entsprechende Gleichgewichtsdruck des primären Gases ist, um Gashydrat bei der Anfangstemperatur zu bilden.

5. Verfahren nach Anspruch 1, weiter umfassend mechanisches Komprimieren des hergestellten Mediums für schnelle Hydratbildung bei einer Temperatur unter dem Gefrierpunkt, auf ein Volumen von nicht weniger als 1,2-mal dem Volumen der wässrigen Lösung;
wobei bevorzugt die Temperatur während der mechanischen Kompression gesteuert wird, um höher als oder gleich -5 °C und geringer als 0 °C zu sein.

6. Medium für schnelle Hydratbildung, das durch das Verfahren nach einem der Ansprüche 1 bis 5 hergestellt wird.

7. Verwendung des Mediums für schnelle Hydratbildung nach Anspruch 6 bei Gasspeicherung und -transport auf Basis von Hydrat, Gastrennung auf Basis von Hydrat oder Kältespeicherung auf Basis von Hydrat.

8. Verfahren zum Verwenden eines Mediums für schnelle Hydratbildung, umfassend:

direktes Kontaktieren des Mediums für schnelle Hydratbildung nach Anspruch 6 mit einem Zielgas bei einer Nutzungstemperatur größer als -2,5 °C und geringer als 0 °C, um die Speicherung und/oder Trennung des Zielgases zu erzielen, danach Regenerieren des Mediums für schnelle Hydratbildung, indem das Hydrat von Zielgas bei einer Temperatur größer als -2,5 °C und geringer als 0 °C zersetzt wird;
wobei während des Nutzungsprozesses der Teildruck einer Zielkomponente in dem Zielgas größer als der entsprechende Gleichgewichtsdruck der reinen Zielkomponente ist, um Gashydrat bei der Nutzungstemperatur zu bilden, und die Zielkomponente eine Komponente ist, die bevorzugt in die Hydratphase eintritt.

9. Verfahren nach Anspruch 8, wobei das Zielgas eines oder mehrere von Methan, Kohlendioxid, Naturgas, Wasserstoff, Rauchgas, Biogas, Flözgas, Raffineriegas, Spülgas einer synthetischen Ammoniakanlage, IGCC-Synthesegas, Kältemittel R410 und Kältemittel R507 beinhaltet.

**Revendications**

1. Procédé de préparation d'un milieu pour la formation rapide d'hydrates, comprenant :

la formulation d'un promoteur cinétique et d'eau en une solution aqueuse ;
la formation d'un hydrate primaire par la réaction de la solution aqueuse et d'un gaz primaire à une température initiale supérieure à 0 °C et inférieure à 5 °C ;
la diminution de la température de l'hydrate primaire obtenu par la réaction, de la solution aqueuse résiduelle et du gaz primaire restant jusqu'à une température de décomposition supérieure à -2,5 °C et inférieure à 0 °C ; l'évacuation du gaz primaire restant et le maintien de la pression de l'hydrate primaire refroidi et de la solution aqueuse résiduelle congelée à la pression atmosphérique ou à une pression inférieure ; la libération du gaz stocké dans l'hydrate primaire, et enfin l'acquisition d'une substance de type glace, qui est le milieu pour la formation rapide d'hydrates.

2. Procédé selon la revendication 1, dans lequel le promoteur cinétique comprend un ou plusieurs parmi le dodécylsulfate de sodium, le tétradécylsulfate de sodium, l'hexadécylsulfate de sodium, le dodécylbenzènesulfonate de sodium, la leucine et la L-méthionine ;
de préférence, la concentration massique du promoteur cinétique dans la solution aqueuse est supérieure à 100 ppm.

3. Procédé selon la revendication 1, dans lequel le gaz primaire comprend un ou plusieurs parmi le méthane, l'éthane, le propane, l'éthylène et le dioxyde de carbone.

4. Procédé selon la revendication 1, dans lequel la pression de formation de l'hydrate primaire est supérieure à la pression d'équilibre correspondante du gaz primaire pour former l'hydrate de gaz à la température initiale.

5. Procédé selon la revendication 1, comprenant en outre la compression mécanique du milieu préparé pour la formation rapide d'hydrates à une température inférieure au point de glace, jusqu'à un volume supérieur ou égal à 1,2 fois le volume de la solution aqueuse ;
de préférence, la température pendant la compression mécanique est régulée pour être supérieure ou égale à -5 °C et inférieure à 0 °C.

6. Milieu pour la formation rapide d'hydrates préparé par le procédé selon l'une quelconque des revendications 1 à 5.

7. Utilisation du milieu pour la formation rapide d'hydrates selon la revendication 6 dans le stockage et le transport de gaz à base d'hydrates, la séparation de gaz à base d'hydrates ou l'entreposage frigorifique à base d'hydrates.

8. Procédé d'utilisation d'un milieu pour la formation rapide d'hydrates, comprenant :

la mise en contact directe du milieu pour la formation rapide d'hydrates selon la revendication 6 avec un gaz cible à une température d'utilisation supérieure à -2,5 °C et inférieure à 0 °C, pour réaliser le stockage et/ou la séparation du gaz cible, puis la régénération du milieu pour la formation rapide d'hydrates par la décomposition de l'hydrate de gaz cible à une température supérieure à -2,5 °C et inférieure à 0 °C ;
dans lequel, au cours du processus d'utilisation, la pression partielle d'un composant cible dans le gaz cible est supérieure à la pression d'équilibre correspondante du composant cible pur pour former un hydrate de gaz à la température d'utilisation, et le composant cible est un composant qui entre préférentiellement dans la phase d'hydrate.

9. Procédé selon la revendication 8, dans lequel le gaz cible inclut un ou plusieurs parmi le méthane, le dioxyde de carbone, le gaz naturel, l'hydrogène, le gaz de combustion, le biogaz, le gaz de houille, le gaz de raffinerie, le gaz de purge des usines d'ammoniac synthétique, le gaz de synthèse IGCC, le réfrigérant R410, et le réfrigérant R507.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104974713 A
- CN 104857891 A
- CN 108003952 A
- US 20140363361 A1
- US 2012260680 A1